# EUROPÄISCHE PATENTSCHRIFT

(11) **EP 1 532 904 B1**
(45) Veröffentlichungstag und Bekanntmachung des Hinweises auf die Patenterteilung: **01.08.2007**
(21) Anmeldenummer: 03405830.5
(22) Anmeldetag: 20.11.2003
(51) Int. Cl.: A47J 31/40

(54) **Kaffeemaschine**
Coffee machine
Machine à café

(43) Veröffentlichungstag der Anmeldung: 25.05.2005
(73) Patentinhaber: Steiner AG Weggis, 6353 Weggis (CH)
(72) Erfinder: Bruttin, Hubert, 3973 Venthône (CH); Comte, Philippe, 1976 Daillon (CH)
(74) Vertreter: Luchs, Willi

(56) Entgegenhaltungen:
- EP-A- 1 121 882

## Beschreibung

Die Erfindung betrifft eine Kaffeemaschine mit einer Zylinder-Kolbenbrüheinheit zum Brühen von gemahlenem Kaffee.

Eine Kaffeemaschine dieser Art ist in der EP-A-761 150 beschrieben. Bei derartigen Kaffeemaschinen wird zunächst der gemahlene Kaffee in einen von den Kolben der Brüheinheit begrenzten Hohlraum des Brühzylinders eingefüllt, dann die darin befindliche Portion Kaffee zwischen den Kolben zusammengepresst und danach durch den einen Kolben brühendes Wasser durch den zusammengepressten Kaffeekuchen gepumpt, während durch den anderen Kolben der auf diese Weise gebrühte Kaffee zum Kaffee-Auslass befördert wird. Anschliessend wird durch Zurückfahren des Brühzylinders und des einen Kolbens die verbrauchte Kaffeesatzportion ausgestossen.

Bekannt sind auch Kaffeemaschinen, bei denen Kapseln mit vorgemahlenem Kaffee Verwendung finden. Derartige Kapseln sind aber lediglich in Kaffeemaschinen einsetzbar, die nur mit solchen Kapseln arbeiten können, oder die mit Kolben arbeiten, in die von Hand gemahlener Kaffee oder alternativ solche Kapseln eingesetzt werden.

Eine weitere Kaffeemaschine ist aus der EP 1121882 A bekannt.

Der Erfindung liegt die Aufgabe zugrunde, eine Kaffeemaschine der eingangs genannten Art zu schaffen, die mit einem geringem apparativen Aufwand sowie bequemer und funktionssicherer Bedienung eine universellere Nutzung ermöglicht.

Diese Aufgabe wird erfindungsgemäss dadurch gelöst, dass die Kaffeemaschine mit einem Kaffee-Auslasskopf versehen ist, aus dem Kaffee sowohl aus der Zylinder-Kolbenbrüheinheit als auch aus einer im Auslasskopf eingebauten Kapselbrüheinheit zum Brühen von Kapseln mit vorgemahlenem Kaffee, Milchpulver oder Teeportionen entnehmbar ist.

Dadurch ist es möglich, ohne nennenswerten Aufwand die Kaffeemaschine je nach Wunsch oder Bedarf auf herkömmliche Weise mit dem darin gemahlenen Kaffee oder aber mit vorgefertigten Kaffeekapseln zu betreiben. Hierbei sind wesentliche Komponenten der Kaffeemaschine, wie die Heisswasserversorgung, die Pumpvorrichtung oder Teile des Reinigungssystems gleich bei beiden Betriebsweisen benutzbar.

Zwecks einer einfachen und bequemen Bedienung der Maschine sieht die Erfindung vor, dass der Kaffee-Auslasskopf mit einer Umschaltvorrichtung zur wahlweise Entnahme von Kaffee aus der Zylinder-Kolbenbrüheinheit oder aus der Kapselbrüheinheit versehen ist.

Es ist ferner gemäss der Erfindung vorgesehen, dass der Kaffee-Auslasskopf mit einem gemeinsamen Kaffee-Auslass für die Zylinder-Kolbenbrüheinheit und die Kapselbrüheinheit versehen ist, der mittels der Umschaltvorrichtung wahlweise mit einer der beiden Brüheinheiten verbindbar ist.

Alternativ dazu ist es erfindungsgemäss vorgesehen, dass der Kaffee-Auslasskopf je einen Kaffee-Auslass für die Zylinder-Kolbenbrüheinheit und die Kapselbrüheinheit aufweist, die mittels der Umschaltvorrichtung wahlweise mit je einer der beiden Brüheinheiten oder mit beiden Brüheinheiten gleichzeitig verbindbar sind.

Zum periodischen Reinigen des Kaffee-Auslasskopfes sieht die Erfindung vor, dass dieser durch die Umschaltvorrichtung von der Betriebsstellung zum Spenden von gebrühtem Kaffee in eine Betriebsstellung zum Durchspülen des Kaffee-Auslasskopfes mit Heisswasser oder einer entsprechenden Flüssigkeit umstellbar ist.

Zwecks eines kompakten und leicht zugänglichen Aufbaus weist der Kaffee-Auslasskopf erfindungsgemäss ein Gehäuse mit einem Kanalblock und einem aufklappbaren Deckel mit einem Kapselaufnehmer auf, wobei der Kanalblock sich aus drei zusammenwirkenden Blockteilen mit Verbindungskanälen zur Heisswasserversorgungseinheit sowie zum Aufnahmeraum des Kapselaufnehmers und zum Kaffee-Auslass des Kaffee-Auslasskopfes zusammensetzt, wobei der hintere und der vordere Blockteil ortsfest im Gehäuse eingebaut sind, während der mittlere Blockteil durch die Umschaltvorrichtung des Kaffee-Auslasskopfes relativ zu den beiden anderen Blockteilen verstellbar ist.

Es ist hierbei von Vorteil, wenn die drei Blockteile auf einem mittig angeordneten Tragzapfen sitzen, der mit weiteren Verbindungskanälen zur Heisswasserversorgungseinheit und zum Aufnahmeraum des Kapselaufnehmers versehen ist.

Um eine Fehlfunktion des Kaffee-Auslasskopfes zu vermeiden, sieht die Erfindung vor, dass der Kapselaufnehmer an einem am Gehäuse schwenkbar angelenkten Tragblech des Deckels befestigt ist, das im Gehäuse einhakbare Arretierhaken sowie den Betriebsstellungen des Kaffee-Auslasskopfes zugeordnete Vertiefungen aufweist, in welche ein am mittleren Blockteil befestigter Verriegelungsstift einrastbar ist.

Hierzu ist es auch erfindungsgemäss vorgesehen, dass der Kaffee-Auslasskopf mit einer Sicherheitssperre zum Verriegeln des Tragbleches bei zugeklapptem Deckel versehen ist.

Es ist hierbei von Vorteil, wenn der Sperrhebel auf einer Drehstange mit endseitig angeordneten Betätigungshebeln gelagert ist, auf welcher ein Rastensegment mit einer Vertiefung zur Aufnahme des Verriegelungsstiftes drehfest sitzt.

Im Sinne einer einfachen und bequemen Bedienung der Maschine sieht die Erfindung ferner vor, dass die Umschaltvorrichtung des Kaffee-Auslasskopfes mit einem den Kaffee-Auslass steuernden Wegeventil versehen ist, das mit einem Steuerventil für die Zylinder-Kolbenbrüheinheit und einem Steuerventil für die Kapselbrüheinheit zusammenwirkt.

Die Umschaltvorrichtung kann auch zweckmässigerweise mit einem Steuerventil für eine Wasserdampf spendende Einheit und /oder einem Steuerventil für eine Tee spendende Einheit zusammenwirken.

Die Erfindung wird nachfolgend anhand eines Ausführungsbeispiel unter Bezugnahme auf die Zeichnung näher erläutert. Es zeigen:
- Fig. 1: einen erfindungsgemässen Kaffee-Auslasskopf für eine Kaffeemaschine mit einer Zylinder-Kolbenbrüheinheit, in der Vorderansicht dargestellt,
- Fig. 2: einen Schnitt entlang der Linie II-II in Fig. 1, in Kaffee spendender Betriebsstellung dargestellt,
- Fig. 3: einen Schnitt entlang der Linie III-III in Fig. 1, in Reinigungsstellung dargestellt,
- Fig. 4: den Schnitt aus Fig. 3, in Kaffee spendender Stellung und perspektivisch dargestellt,
- Fig. 5: den Schnitt aus Fig. 3, in Reinigungsstellung und perspektivisch dargestellt,
- Fig. 6: den Kaffee-Auslasskopf aus Fig. 1, mit aufgeklapptem Deckel und perspektivisch dargestellt,
- Fig. 7: eine Seitenansicht in Richtung des Pfeils VII in Fig. 1, perspektivisch und vergrössert dargestellt, und
- Fig. 8: den Steuerungsplan einer Kaffeemaschine mit dem Kaffee-Auslasskopf aus Fig. 1, schematisch dargestellt.

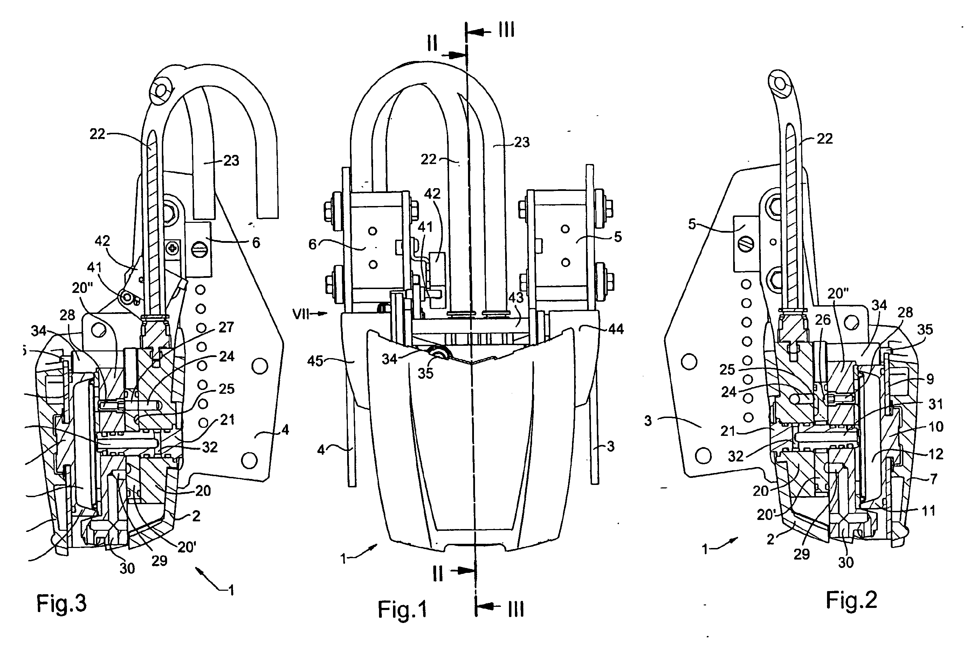

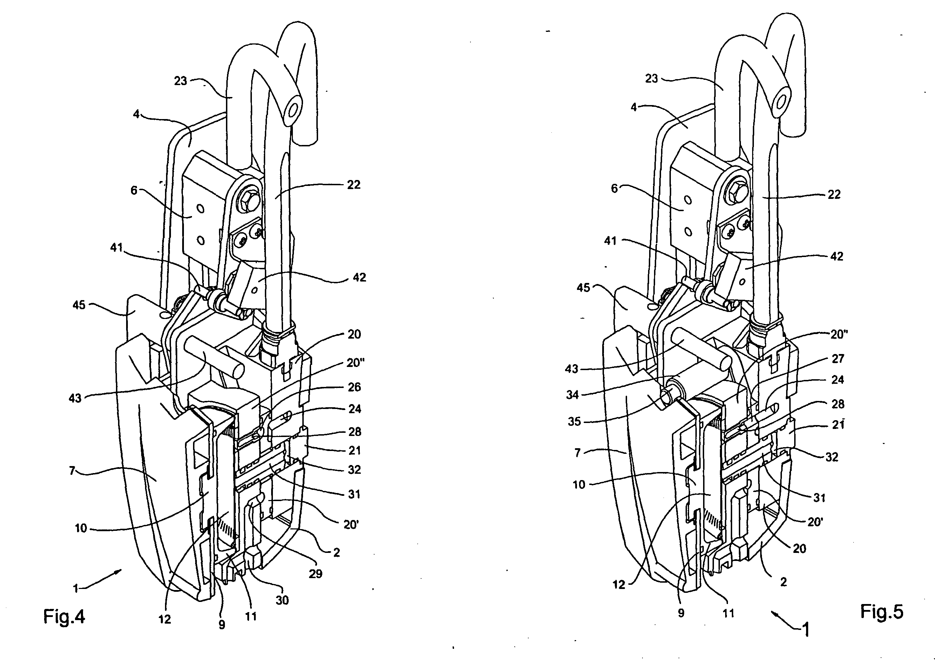

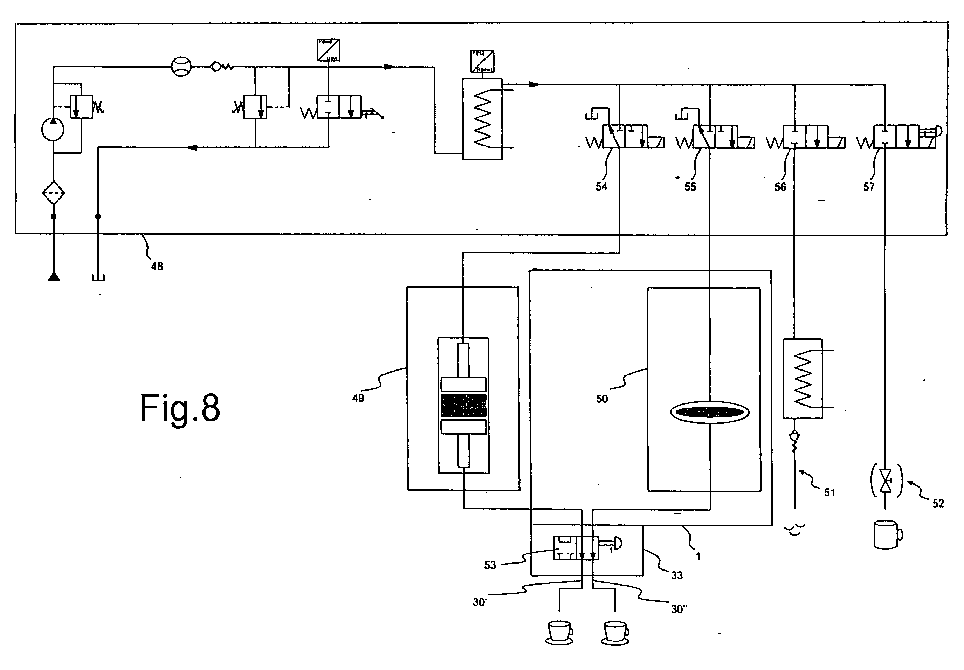

Der in den Figuren 1 bis 6 dargestellte Kaffee-Auslasskopf 1 weist ein Gehäuse 2 auf, das mit zwei Konsolen 3, 4 zur Befestigung des Kaffee-Auslasskopfes 1 an die in Figur 8 schematisch dargestellte Kaffeemaschine mit eingebauter Kaffeemühle und einer Zylinder-Kolbenbrüheinheit zum Brühen des gemahlenen Kaffees versehen ist. Das Gehäuse 2 ist mit schlittenförmig ausgebildeten Halterungen 5, 6 versehen, mit denen es an den Konsolen 3, 4 höhenverstellbar angeflanscht ist.

Der Kaffee-Auslasskopf 1 weist ferner stirnseitig einen Deckel 7 auf, der am Gehäuse 2 aufklappbar ist. Im Deckel 7 ist ein um Bolzen 8 schwenkbares Tragblech 9 angeordnet, an dem mittels eines Bajonettverschlusses 10 ein Kapsel-Aufnehmer 11 mit einem Kapsel-Aufnahmeraum 12 befestigt ist.

Das Tragblech 9 weist ferner eine Randleiste 13 auf, die mit zwei Arretierhaken 14, 15 und zwei Vertiefungen 16, 17 versehen ist. Bei zugeklapptem Deckel 7 sind diese mit entsprechenden Stützhaken 18, 19 des Gehäuses 2 festgehakt.

Im Gehäuse 2 ist ferner ein dreiteiliger Kanalblock 20, 20', 20" mit einem zentralen Tragzapfen 21 eingebaut. An dem hinteren Blockteil 20 sind eine Zulaufleitung 22 und eine Ablaufleitung 23 angeschlossen. Beide Leitungen stehen über einen Kanal 24 des hinteren Blockteils 20 mit einer teilkreisförmigen Nut 25 des mittleren Blockteils 20' in Verbindung. Letzterer weist auf der gegenüberliegenden Seite einen Ringkanal 26 auf, der mit der Nut 25 über einen Durchgangskanal 27 verbindbar ist. Der Ringkanal 26 ist ferner mit Kanälen 28, 29 des vorderen Blockteils 20" verbindbar, wobei der Kanal 28 mit dem Kapsel-Aufnahmeraum 12 und der Kanal 29 mit dem Kaffee-Auslass 30 des Kaffee-Auslasskopfes 1 verbunden ist.

Der zentrale Tragzapfen 21 weist seinerseits einen axialen Kanal 31 und einen radialen Kanal 32 auf, die mit dem Kapsel-Aufnahmeraum 12 bzw. der Zulaufleitung 22 verbunden sind.

Der hintere und der vordere Blockteil 20, 20" sind im Gehäuse 2 auf dem Tragzapfen 21 ortsfest sitzend eingebaut. Der mittlere Blockteil 20' ist dagegen auf dem Tragzapfen 21 drehbar gelagert. Er ist mittels eines nicht dargestellten Hydraulikantriebs zwischen zwei Endstellungen drehbar, die mit den Betriebsstellungen "Kaffee spenden" bzw. "Reinigen" des Kaffee-Auslasskopfes 1 korrespondieren. Diesen Endstellungen sind die Vertiefungen 16, 17 im Tragblech 9 des Deckels 7 zugeordnet. Die Steuerung des Hydraulikantriebs erfolgt durch eine Umschaltvorrichtung 33, mittels derer der Kaffee-Auslasskopf 1 in eine der beiden vorstehend genannten Betriebsstellungen bringbar ist.

Der mittlere Blockteil 20' weist stirnseitig einen Tragbolzen 34 mit einem Verriegelungsstift 35 auf, der bei Erreichen der vorgenannten Endstellungen in die entsprechende Vertiefung 16 bzw. 17 des Tragbleches 9 einrastet. Dadurch ist sichergestellt, dass beim Betätigen der Umschaltvorrichtung 33 der mittlere Blockteil 20' im Zusammenwirken mit den Blockteilen 20, 20" funktionsgerecht die jeweils erforderlichen Verbindungen herstellt.

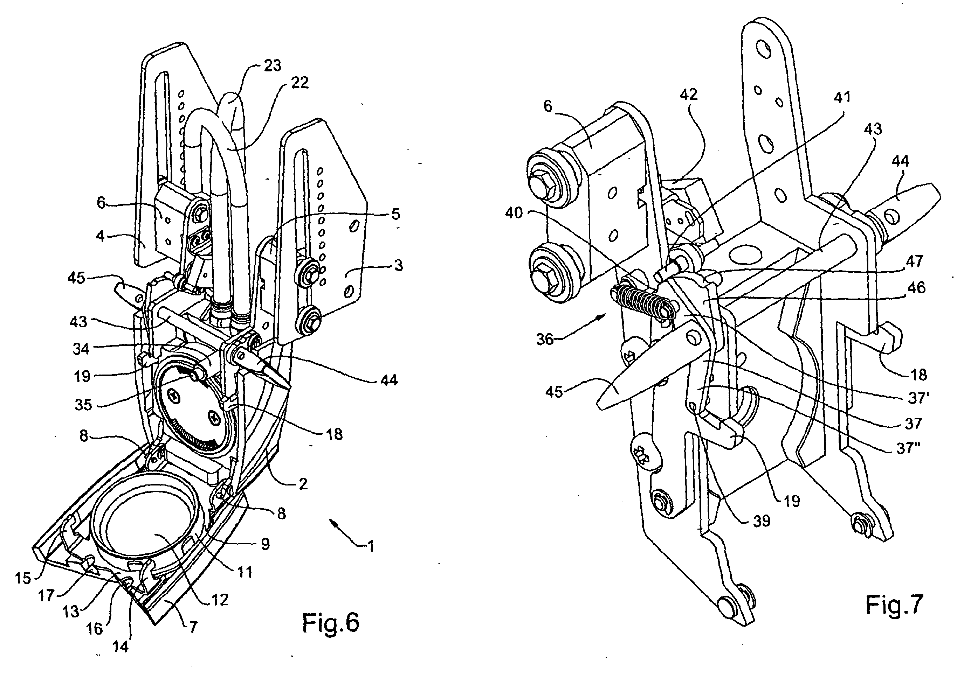

Der Kaffee-Auslasskopf 1 ist mit einer aus Figur 7 ersichtlichen Sicherheitssperre 36 ausgestattet. Sie besteht aus einem zweiarmigen Sperrhebel 37, dessen Hebelarm 37' durch eine Feder 38 beaufschlagt ist, während der andere Hebelarm 37" einen Druckbolzen 39 aufweist, der während des Brühvorgangs bzw. des pendenden Vorgangs oder während des Reinigungvorgangs gegen den Arretierhaken 15 des Tragbleches 9 angedrückt ist. Damit wird verhindert, dass man den Deckel 7 des Kaffee-Auslasskopfes 1 versehentlich vor Ablauf des jeweiligen Arbeitsvorganges aufklappen kann.

Der Sperrhebel 37 weist ferner am Hebelarm 37" eine Vertiefung 40 zur Aufnahme eines Verriegelungsstiftes 41 auf, der mit einem Schalter 42 der Umschaltvorrichtung 33 zusammenwirkt.

Der Sperrhebel 37 ist auf einer Drehstange 43 mit endseitig angeordneten Betätigungshebeln 44, 45 gelagert, auf welcher ein Rastensegment 46 mit einer Vertiefung 47 zur Aufnahme des Verriegelungsstiftes 41 drehfest sitzt. Beim Betätigen der Sicherheitssperre 36 mit Hilfe der Betätigungshebel 44, 45 wird der Rastensegment 46 soweit geschwenkt, bis der Verriegelungsstift 41 in die Vertiefung 47 einrastet. Anschliessend wird der Sperrhebel 37 gegen die Feder 38 soweit gedreht, bis der Verriegelungsstift 41 auch in die Vertiefung 40 des Sperrhebels 37 einrastet und letzteren solange in Sperrstellung hält, bis der Schalter 42 den Verriegelungsstift 41 in Abhängigkeit von der Betriebsstellung des Kaffee-Auslasskopfes 1 wieder umschaltet.

Wie aus Figur 8 ersichtlich, ist die Kaffeemaschine mit einer Heisswasserversorgungseinheit 48, einer Zylinder-Kolbenbrüheinheit 49, einer im Kaffee-Auslasskopf 1 eingebauten Kapselbrüheinheit 50, einer Wasserdampf spendenden Einheit 51 sowie einer Tee spendenden Einheit 52 ausgestattet.

Die Umschaltvorrichtung 33 weist ein den Kaffee-Auslass 30 des Kaffee-Auslasskopfes 1 steuerndes Wegeventil 53 auf, das mit einem Steuerventil 54 für die Zylinder-Kolbenbrüheinheit 49 und einem Steuerventil 55 für die Kapselbrüheinheit 50, sowie mit einem Steuerventil 56 für die Wasserdampf spendende Einheit 51 und einem Steuerventil 57 für die Tee spendende Einheit 52 zusammenwirkt. Je nachdem, welche Betriebsweise mit der Umschaltvorrichtung 33 gewählt wird, kann im Kaffee-Auslass 30 durch entsprechendes Umschalten des Wegeventils 49 Kaffee aus der Zylinder-Kolbenbrüheinheit 49 oder Kaffee, Milch, Tee oder ähnliches aus der Kapselbrüheinheit 50 entnommen werden.

Der Kaffee-Auslasskopf 1 kann auch mit zwei separaten Kaffee-Auslässen 30', 30" für die Zylinder-Kolbenbrüheinheit 49 und die Kapselbrüheinheit 50 versehen sein. In diesem Fall arbeitet das Wegeventil analog, es ist nur konstruktiv entsprechend angepasst.

Es ist auch selbstverständlich möglich, den Kaffee-Auslass 30', 30" mit jeweils mehreren Abzweigungen zum gleichzeitigen mehrfachen Spenden von Kaffee aus der einen oder der anderen Kaffeebrüheinheit zu versehen.

Wie aus den Figuren 2 und 4 bzw. 3 und 5 ersichtlich, unterscheidet sich die Betriebsstellung des Kaffee-Auslasskopfes 1 zum Spenden von Kaffee von der Betriebsstellung zum Reinigen des Auslasskopfes 1 im wesentlichen dadurch, dass im ersten Fall im Kapsel-Aufnehmer 11 eine Kaffee-Kapsel eingelegt ist und ihm Heisswasser durch die Zulaufleitung 22 und die Kanäle 32, 31 des Tragzapfes 21 zugeführt wird, während der gebrühte Kaffee durch den Kanal 28 des vorderen Blockteils 20', den Ringkanal 26 und die Kanäle 29, 30 des mittleren Blockteils 20' herausfliesst.

Im zweiten Fall ist im Kapsel-Aufnehmer 11 eine Reinigungstablette eingelegt, und das ihm durch die Zulaufleitung 22 und die Kanäle 31, 32 zugeführte Heisswasser wird aus dem Kapsel-Aufnahmeraum 12 durch die Kanäle 28, 27 und 24 sowie die Ablaufleitung 23 abgeführt. Der Reinigungsvorgang kann selbstverständlich auch ohne Verwendung einer Reinigungstablette bzw. mit jeder anderen dafür geeigneten Reinigungsflüssigkeit durchgeführt werden.

## Patentansprüche

1. Kaffeemaschine mit einer Zylinder-Kolbenbrüheinheit (49) zum Brühen von gemahlenem Kaffee,
**dadurch gekennzeichnet, dass**
die Kaffeemaschine mit einem Kaffee-Auslasskopf (1) versehen ist, aus dem Kaffee sowohl aus der Zylinder-Kolbenbrüheinheit (49) als auch aus einer im Kaffee-Auslasskopf (1) eingebauten Kapselbrüheinheit (50) zum Brühen von Kapseln mit vorgemahlenem Kaffee, mit Milchpulver oder mit Teeportionen entnehmbar ist.

2. Kaffeemaschine nach Anspruch 1,
**dadurch gekennzeichnet, dass**
der Kaffee-Auslasskopf (1) mit einer Umschaltvorrichtung (33) zur wahlweise Entnahme von Kaffee aus der Zylinder-Kolbenbrüheinheit (49) oder aus der Kapselbrüheinheit (50) versehen ist.

3. Kaffeemaschine nach Anspruch 2,
**dadurch gekennzeichnet, dass**
der Kaffee-Auslasskopf (1) mit einen gemeinsamen Kaffee-Auslass (30) für die Zylinder-Kolbenbrüheinheit (49) und die Kapselbrüheinheit (50) versehen ist, der mittels der Umschaltvorrichtung (33) wahlweise mit einer der beiden Brüheinheiten (49 bzw.50) verbindbar ist.

4. Kaffeemaschine nach Anspruch 2,
**dadurch gekennzeichnet, dass**
der Kaffee-Auslasskopf (1) je einen Kaffee-Auslass (30' bzw. 30") für die Zylinder-Kolbenbrüheinheit (49) und die Kapselbrüheinheit (50) aufweist, die mittels der Umschaltvorrichtung (33) wahlweise mit je einer der beiden Brüheinheiten (49 bzw. 50) oder mit beiden Brüheinheiten gleichzeitig verbindbar sind.

5. Kaffeemaschine nach einem der Ansprüche 2 bis 4,
**dadurch gekennzeichnet, dass**
der Kaffee-Auslasskopf (1) durch die Umschaltvorrichtung (33) von der Betriebsstellung zum Spenden von gebrühtem Kaffee in eine Betriebsstellung zum Durchspülen des Kaffee-Auslasskopfes (1) mit Heisswasser oder einer entsprechenden Flüssigkeit umstellbar ist.

6. Kaffeemaschine nach einem der Ansprüche 2 bis 5,
**dadurch gekennzeichnet, dass**
der Kaffee-Auslasskopf (1) ein Gehäuse (2) mit einem Kanalblock (20, 20', 20") und einem aufklappbaren Deckel (7) mit einem Kapselaufnehmer (11) aufweist, wobei der Kanalblock (20, 20', 20") sich aus drei zusammenwirkenden Blockteilen mit Verbindungskanälen (24 bis 29) zur Heisswasserversorgungseinheit (48) sowie zum Aufnahmeraum (12) des Kapselaufnehmers (11) und zum Kaffee-Auslass (30) des Kaffee-Auslasskopfes (1) zusammensetzt, wobei der hintere und der vordere Blockteil (20 bzw. 20") ortsfest im Gehäuse (2) eingebaut sind, während der mittlere Blockteil (20') durch die Umschaltvorrichtung (33) des Kaffee-Auslasskopfes (1) relativ zu den beiden anderen Blockteilen (20 bzw. 20") verstellbar ist.

7. Kaffeemaschine nach Anspruch 6,
**dadurch gekennzeichnet, dass**
die drei Blockteile (20, 20', 20") auf einem mittig angeordneten Tragzapfen (21) sitzen, der mit weiteren Verbindungskanälen (31, 32) zur Heisswasserversorgungseinheit (48) und zum Aufnahmeraum (12) des Kapselaufnehmers (11) versehen ist.

8. Kaffeemaschine nach einem der Ansprüche 6 und 7,
**dadurch gekennzeichnet, dass**
die Verbindungskanäle (24, 28, 29 bzw. 31, 32) der ortsfesten Blockteile (20, 20") und des Tragzapfens (21) je nach gewählter Betriebsstellung des Kaffee-Auslasskopfes (1) miteinander über die Verbindungskanäle (25, 26, 27) des mittleren Blockteils (20') verbindbar sind.

9. Kaffeemaschine nach einem der Ansprüche 6 bis 8,
**dadurch gekennzeichnet, dass**
der mittlere Blockteil (20') durch einen von der Umschaltvorrichtung (33) gesteuerten Hydraulikantrieb verstellbar ist.

10. Kaffeemaschine nach Anspruch 6,
**dadurch gekennzeichnet, dass**
der Kapselaufnehmer (11) an einem am Gehäuse (2) schwenkbar angelenkten Tragblech (9) des Deckels (7) befestigt ist, das im Gehäuse (2) fixierbare Arretierhaken (14, 15) sowie den Betriebsstellungen des Kaffee-Auslasskopfes (1) zugeordnete Vertiefungen (16, 17) aufweist, in welche ein an dem mittleren Blockteil (20') befestigter Verriegelungsstift (35) einrastbar ist.

11. Kaffeemaschine nach einem der Ansprüche 2 bis 10,
**dadurch gekennzeichnet, dass**
der Kaffee-Auslasskopf (1) mit einer Sicherheitssperre (36) zum Verriegeln des Tragbleches (9) bei zugeklapptem Deckel (7) versehen ist.

12. Kaffeemaschine nach den Ansprüchen 10 und 11,
**dadurch gekennzeichnet, dass**
die Sicherheitssperre (36) mit einen zweiarmigen Sperrhebel (37) versehen ist, dessen einer Hebelarm (37') durch eine Feder (38) beaufschlagt ist, während der andere Hebelarm (37") gegen einen Arretierhaken (15) des Tragbleches (9) andrückbar ist. '

13. Kaffeemaschine nach Anspruch 12,
**dadurch gekennzeichnet, dass**
der Sperrhebel (37) an anderen Hebelarm (37") eine Vertiefung (40) zur Aufnahme eines Verriegelungsstiftes (41) aufweist, der mit einem Schalter (42) der Umschaltvorrichtung (33) zusammenwirkt.

14. Kaffeemaschine nach Anspruch 13,
**dadurch gekennzeichnet, dass**
der Sperrhebel (37) auf einer Drehstange (43) mit endseitig angeordneten Betätigungshebeln (44, 45) gelagert ist, auf welcher ein Rastensegment (46) mit einer Vertiefung (47) zur Aufnahme des Verriegelungsstiftes (41) drehfest sitzt.

15. Kaffeemaschine nach einem der Ansprüche 2 bis 14,
**dadurch gekennzeichnet, dass**
die Umschaltvorrichtung (33) mit einem den Kaffee-Auslass (30) steuernden Wegeventil (53) versehen ist, das mit einem Steuerventil (54) für die Zylinder-Kolbenbrüheinheit (49) und einem Steuerventil (55) für die Kapselbrüheinheit (50) zusammenwirkt.

16. Kaffeemaschine nach Anspruch 15,
**dadurch gekennzeichnet, dass**
die Umschaltvorrichtung (33) zusätzlich mit einem Steuerventil (56) für einen Wasserdampf spendende Einheit (51) und/oder einem Steuerventil (57) für eine Tee spendende Einheit (52) zusammenwirkt.

## Claims

1. Coffee machine with a cylinder piston brewing unit (49) for the brewing of ground coffee,
**characterised in that**
the coffee machine is equipped with a coffee outlet head (1), from which coffee can be dispensed from the cylinder piston brewing means (49) as well as from a capsule brewing unit (50) installed within the coffee outlet head (1), for the brewing of capsules with pre-ground coffee, with milk powder, or with tea portions.

2. Coffee machine according to Claim 1,
**characterised in that**
the coffee outlet head (1) is equipped with a switching means (33) for the optional dispensing of coffee from the cylinder piston brewing unit (49) or from the capsule brewing unit (50).

3. Coffee machine according to Claim 2,
**characterised in that**
the coffee outlet head (1) is equipped with a common coffee outlet (30) for the cylinder piston brewing unit (49) and the capsule brewing unit (50), whereby the same can be optionally connected with one of the two brewing units (49, i.e. 50) via the switching means (33).

4. Coffee machine according to Claim 2,
**characterised in that**
the coffee outlet head (1) incorporates one coffee outlet (30', i.e. 30") each for the cylinder piston brewing unit (49) and the capsule brewing unit (50), which can be optionally connected with one of the two brewing units (49, i.e. 50) or with both brewing units simultaneously via the switching means (33).

5. Coffee machine according to one of the Claims 2 to 4,
**characterised in that**
the coffee outlet head (1) can be switched from the operating position for the dispensing of brewed coffee to an operating position for the flushing of the coffee outlet head (1) with hot water or a relevant fluid via the switching means (33).

6. Coffee machine according to one of the Claims 2 to 5,
**characterised in that**
the coffee outlet head (1) incorporates a housing (2) with a channel block (20, 20', 20") and a tiltable lid (7) with a capsule receiver (11), whereby the channel block (20, 20', 20") consists of three co-operating block sections with connecting channels (24 to 29) to the hot water supply unit (48) as well as to the receiving space (12) of the capsule receiver (11) and to the coffee outlet (30) of the coffee outlet head (1), whereby the rear and the front block sections (20, i.e. 20") are fixedly installed within the housing (2), whilst the central block section (20') can be adjusted via the switching means (33) of the coffee outlet head (1) in relation to the two other block sections (20, i.e. 20").

7. Coffee machine according to Claim 6,
**characterised in that**
the three block sections (20, 20', 20") are installed upon a centrally positioned support pin (21), which is in turn equipped with further connecting channels (31, 32) to the hot water supply unit (48) and the receiving space (12) of the capsule receiver (11).

8. Coffee machine according to one of the Claims 6 and 7,
**characterised in that**
the connecting channels (24, 28, 29, i.e. 31, 32) of the fixedly installed block sections (20, 20") and the support pin (21) can be connected with one another via the connecting channels (25, 26, 27) of the central block section (20') depending on the selected operating position of the coffee outlet head (1).

9. Coffee machine according to one of the Claims 6 to 8,
**characterised in that**
the central block section (20') can be adjusted via a hydraulic drive controlled by the switching means (33).

10. Coffee machine according to Claim 6,
**characterised in that**
the capsule receiver (11) is affixed to a tiltable metal support sheet (9) of the lid (7) of the housing (2), and **in that** the same incorporates arresting hooks (14, 15) that can be fixed within the housing (2) as well as recesses (16, 17) corresponding with the operating positions of the coffee outlet head (1), in which a locking pin (35) affixed to the central block section (20') can be engaged.

11. Coffee machine according to one of the Claims 2 to 10,
**characterised in that**
the coffee outlet head (1) is equipped with a safety barrier (36) for locking of the metal support sheet (9) when the lid (7) is closed.

12. Coffee machine according to Claims 10 and 11,
**characterised in that**
the safety barrier (36) is equipped with a two-part locking lever (37) whose one lever arm (37') is tensioned by a spring (38) whilst the other lever arm (37") can be pressed against an arresting hook (15) of the metal support sheet (9).

13. Coffee machine according to Claim 12,
**characterised in that**
the locking lever (37) incorporates a recess (40) on the other lever arm (37"), for the receiving of a locking pin (41) which co-operates with a switch (42) of the switching means (33).

14. Coffee machine according to Claim 13,
**characterised in that**
the locking lever (37) is bearingly positioned upon a rotating rod (43) with activating levers (44, 45) at its ends, on which a ratchet segment (46) with a recess (47) is rotation-resistantly affixed for the receiving of the locking pin (41).

15. Coffee machine according to one of the Claims 2 to 14,
**characterised in that**
the switching means (33) is equipped with a routing valve (53) that controls the coffee outlet (30), and **in that** the same co-operates with a control valve (54) for the cylinder piston brewing unit (49) and a control valve (53) for the capsule brewing unit (50).

16. Coffee machine according to Claim 15,
**characterised in that**
the switching means (33) is further equipped with a control valve (56) for a water vapour dispensing unit (51) and/or a control valve (57) for a tea dispensing unit (52).

## Revendications

1. Machine à café comportant une unité d'infusion à piston et cylindre (49) destinée à faire infuser du café moulu, **caractérisée en ce que** la machine à café est dotée d'une tête de sortie de café (1) permettant d'obtenir du café provenant aussi bien de l'unité d'infusion à piston et cylindre (49) que d'une unité d'infusion à dosette (50) montée dans la tête de sortie de café (1) et destinée à faire infuser des dosettes de café moulu à l'avance, de lait en poudre ou de portions de thé.

2. Machine à café selon la revendication 1, **caractérisée en ce que** la tête de sortie de café (1) est dotée d'un dispositif de commutation (33) permettant d'obtenir au choix du café provenant de l'unité d'infusion à cylindre et piston (49) ou de l'unité d'infusion à dosette (50).

3. Machine à café selon la revendication 2, **caractérisée en ce que** la tête de sortie de café (1) est dotée d'une sortie de café commune (30) qui est destinée à l'unité d'infusion à cylindre et piston (49) et à l'unité d'infusion à dosette (50) et qui peut être reliée au choix à l'une des deux unités d'infusion (49 ou 50) au moyen du dispositif de commutation (33).

4. Machiné à café selon la revendication 2, **caractérisée en ce que** la tête de sortie de café (1) comporte une sortie de café (30' ou 30") destinée à l'unité d'infusion à cylindre et piston (49) et à l'unité d'infusion à dosette (50) et qui peut être reliée au choix à l'une des deux unités d'infusion (49 ou 50) ou aux deux unités d'infusion au moyen du dispositif de commutation (33).

5. Machine à café selon l'une des revendications 2 à 4, **caractérisée en ce que** la tête de sortie de café (1) peut être commutée de la position de fonctionnement permettant de distribuer du café infusé à une position de fonctionnement permettant de laver la tête de sortie de café (1) avec de l'eau chaude ou un liquide approprié par le dispositif de communication (33).

6. Machine à café selon l'une des revendications 2 à 5, **caractérisée en ce que** la tête de sortie de café (1) comporte un boîtier (2) comprenant un bloc à canaux (20, 20', 20") et un couvercle rabattable (7) contenant un porte-dosette (11), le bloc à canaux (20, 20', 20") étant constitué de trois pièces de bloc coopérant l'une avec l'autre et comportant des canaux de liaison (24 à 29) menant à l'unité d'alimentation en eau chaude (48) ainsi qu'à l'espace de réception (12) du porte-dosette (11) et à la sortie de café (30) de la tête de sortie de café (1), la pièce de bloc arrière et la pièce de bloc avant (20 respectivement 20") étant incorporées de façon fixe dans le boîtier (2), tandis que la pièce de bloc médiane (20') peut être déplacée par le dispositif de commutation (33) de la tête de sortie de café (1) par rapport aux deux autres pièces de bloc (20 respectivement 20").

7. Machine à café selon la revendication 6, **caractérisée en ce que** les trois pièces de bloc (20, 20', 20") siègent sur un tourillon de support (21), placé au milieu, qui est doté d'autres canaux de liaison (31, 32) menant à l'unité d'alimentation en eau chaude (48) et à l'espace de réception (12) du porte-dosette (11).

8. Machine à café selon l'une des revendications 6 et 7, **caractérisée en ce que** les canaux de liaison (24, 28, 29 respectivement 31, 32) des pièces de bloc fixes (20, 20") et du tourillon de support (21) peuvent être reliés les uns aux autres par l'intermédiaire des canaux de liaison (25, 26, 27) de la pièce de bloc médiane (20') en fonction de la position de fonctionnement choisie de la tête de sortie de café (1).

9. Machine à café selon l'une des revendications 6 à 8, **caractérisée en ce que** la pièce de bloc médiane (20') peut être déplacée par un entraînement hydraulique commandé par le dispositif de commutation (33).

10. Machine à café selon la revendication 6, **caractérisée en ce que** le porte-dosette (11) est fixé à une tôle de support (9) du couvercle (7) qui est articulée de façon à pouvoir pivoter au niveau du boîtier (2) et qui comporte des crochets d'arrêt (14, 15) pouvant être fixés dans le boîtier (2) ainsi que des évidements (16, 17) qui sont associés aux positions de fonctionnement de la tête de sortie de café (1) et dans lesquels peut être encliqueté une tige de verrouillage (35) fixée à la pièce de bloc médiane (20').

11. Machine à café selon l'une des revendications 2 à 10, **caractérisée en ce que** la tête de sortie de café (1) est dotée d'un dispositif de blocage de sécurité (36) permettant de verrouiller la tôle de support (9) lorsque le couvercle est fermé (7).

12. Machine à café selon les revendications 10 et 11, **caractérisée en ce que** le dispositif de blocage de sécurité (36) est doté d'un levier de blocage à deux bras (37) dont un bras de levier (37') est sollicité par un ressort (38) tandis que l'autre bras de levier (37") peut être poussé contre un crochet d'arrêt (15) de la tôle de support (9).

13. Machine à café selon la revendication 12, **caractérisée en ce que** le levier de blocage (37) comporte au niveau de l'autre bras de levier (37") un évidement (40) destiné à recevoir une tige de verrouillage (41) qui coopère avec un commutateur (42) du dispositif de commutation (33).

14. Machine à café selon la revendication 13, **caractérisée en ce que** le levier de blocage (37) est monté sur une barre rotative (43) aux extrémités de laquelle sont placés des leviers d'actionnement (44, 45) et sur laquelle repose fixe en rotation un segment d'encliquetage (46) doté d'un évidement (47) destiné à recevoir la tige de verrouillage (41).

15. Machine à café selon l'une des revendications 2 à 14, **caractérisée en ce que** le dispositif de commutation (33) est doté d'un clapet (53) de commande de la sortie de café (30) et qui coopère avec un clapet (54) de commande de l'unité d'infusion à cylindre et piston (49) et un clapet (55) de commande de l'unité d'infusion à dosette (50).

16. Machine à café selon la revendication 15, **caractérisée en ce que** le dispositif de commutation (33) coopère en plus avec un clapet (56) de commande d'une unité de distribution de vapeur d'eau (51) et/ou un clapet (57) de commande d'une unité de distribution de thé (52).
